Europäisches Patentamt

European Patent Office

Office européen des brevets

(19)

(11) Veröffentlichungsnummer: **0 008 744**
**B1**

(12) EUROPÄISCHE PATENTSCHRIFT

(45) Veröffentlichungstag der Patentschrift:
20.01.82

(21) Anmeldenummer: **79103090.1**

(22) Anmeldetag: **22.08.79**

(51) Int. Cl.³: **F 02 M 27/02**, C 10 G 11/04

(54) Verfahren zum Betrieb von Verbrennungseinrichtungen.

(30) Priorität: **30.08.78 DE 2837899**

(43) Veröffentlichungstag der Anmeldung:
**19.03.80 Patentblatt 80/6**

(45) Bekanntmachung des Hinweises auf die Patenterteilung:
**20.01.82 Patentblatt 82/3**

(84) Benannte Vertragsstaaten:
**AT BE CH FR GB IT NL SE**

(56) Entgegenhaltungen:
**AU-B-5 510 /27**
**DE-A-2 210 438**
**DE-A1-2 542 997**
**US-A-4 026 248**
**SIEMENS FORSCH.- U. ENTWICKL.-BER.,**
**Band 2, Nr. 1, 1973, Berlin**
**H.-J. HENKEL et al. «Kompakter**
**Gasgenerator zur schadstoffarmen Durch-**
**führung von Verbrennungsvorgängen»**
**Seiten 58 bis 62**

(73) Patentinhaber: **SIEMENS AKTIENGESELLSCHAFT Berlin
und München, Postfach 22 02 61, D-8000 München 22 (DE)**

(72) Erfinder: **Kostka, Hana, Dipl.-Ing., Steigbeetstrasse 12,
D-8500 Nürnberg (DE)**

ACTORUM AG.

## Verfahren zum Betrieb von Verbrennungseinrichtungen

Die Erfindung betrifft ein Verfahren zum Betrieb von Verbrennungseinrichtungen, bei dem flüssige Kohlenwasserstoffe mit Luft (Primärluft) vermischt, in einen Reaktionsraum geleitet, dort an Metallkörpern bei erhöhter Temperatur durch partielle Oxidation in ein russfreies, Kohlenmonoxid, Wasserstoff und gasförmige Kohlenwasserstoffe enthaltendes Brenngasgemisch umgesetzt, mit weiterer Luft (Sekundärluft) vermischt und in die Verbrennungseinrichtung eingeleitet werden.

Bei der Verbrennung von flüssigen Brennstoffen in Verbrennungseinrichtungen wie Brennern oder Brennkraftmaschinen, führt die ungleichmässige Vermischung und Verbrennung des Brennstoffes mit der Luft zu einer hohen Schadstoffemission im Abgas, wobei bei der Verwendung von bleihaltigen oder aromatenreichen Brennstoffen auch diese gesundheitsgefährdenden Stoffe im Abgas enthalten sind. Es ist bekannt, dass die Schadstoffemission herabgesetzt werden kann, wenn der Verbrennungseinrichtung ein Gasgenerator vorgeschaltet ist, in dem die Brennstoffe mit Primärluft unter starkem Luftmangel in ein Brenngas umgesetzt werden. Ein derartiges Verfahren ist z.B. in der DE-A-2 103 008 beschrieben, bei dem flüssige Kohlenwasserstoffe vergast, verdampft oder versprüht und anschliessend zusammen mit der Primärluft über einen im Reaktionsraum angeordneten Nickelschwamm oder Platinkatalysator geleitet werden. Dabei kann z.B. unverbleites Rohbenzin niedriger Octanzahl verwendet werden, das in ein Brenngas hoher Octanzahl umgesetzt wird. Anschliessend kann das Brenngas in der Brennkraftmaschine mit Luftüberschuss verbrannt werden, wobei nicht nur die Emission von Kohlenmonoxid und anderen Produkten einer steckengebliebenen Verbrennung, sondern auch die Bildung von Stickoxiden weitgehend vermieden wird.

Es sind auch schon eine Reihe anderer Füllungen für den Reaktionsraum derartiger Spaltgasgeneratoren entwickelt worden, die eine russfreie Umsetzung von Kohlenwasserstoffen mit Luft unter starkem Luftmangel ermöglichen. Diese Füllungen bestehen meist aus einem keramischen Trägermaterial, das insbesondere Aluminiumoxid enthält. Dieses Aluminiumoxid liegt vorzugsweise in instabilen Modifikationen vor, da das thermisch stabile $\alpha$-Al$_2$O$_3$ nur eine sehr geringe katalytische Aktivität für die partielle Oxidation besitzt, während die thermisch instabilen Modifikationen selbst bereits katalytisch aktiv sind und die Aktivität von aufgebrachten aktiven Komponenten, meist Metalloxiden, wirkungsvoll unterstützen.

Entscheidend ist dabei, dass mit geringen Primärluftmengen gearbeitet werden kann, ohne dass es zu einer Russbildung kommt. Nickel oder nickelhaltige Metallegierungen begünstigen eine Russbildung, die zu Betriebsstörungen in der nachgeschalteten Verbrennungseinrichtung und zur Verschmutzung des Katalysators führt. Auch die erwähnten Katalysatoren mit keramischem Trägermaterial können eine Russbildung nicht sicher unterdrücken, wenn der Brennstoff nicht sorgfältig vorverdampft ist, sondern in flüssiger Form auf die heisse Reaktorfüllung gelangt. Ausserdem erfordert der Betrieb derartiger bekannter Spaltgasgeneratoren eine sorgfältige Regelung der Luftzahl, da bei zu hohen Primärluftmengen die Reaktionstemperatur im Gasgenerator ansteigt und die thermisch instabilen Katalysatoren geschädigt werden. Ferner sind viele bekannte Katalysatoren empfindlich auf die Verwendung von schwefelhaltigen Brennstoffen. Die Einhaltung der optimalen Betriebstemperatur erfordert ferner bei Verwendung der bekannten Katalysatoren eine sorgfältige Verfahrensführung, da diese Katalysatoren eine verhältnismässig niedrige Wärmeleitfähigkeit aufweisen und daher die Gefahr einer ungleichmässigen Temperaturverteilung und daher einer unvollständigen Umsetzung im Reaktionsraum besteht.

Der Erfindung liegt die Aufgabe zugrunde, ein Verfahren der eingangs angegebenen Art derart zu verbessern, dass die russfreie Umsetzung von flüssigen Kohlenwasserstoffen in ein Brenngas, das Kohlenmonoxid, Wasserstoff und gasförmige Kohlenwasserstoffe enthält, auch dann noch gewährleistet ist, wenn die Verfahrensführung weniger sorgfältig geregelt wird. So sollen z.B. Lufteinbrüche im Reaktionsraum und Schwankungen der Reaktionstemperatur nicht zu einer andauernden Betriebsstörung führen. Vorteilhaft soll auch die Verwendung schwefelhaltiger Brennstoffe möglich sein. Unter gasförmigen Kohlenwasserstoffen werden dabei Kohlenwasserstoffe verstanden, die unter Normalbedingungen gasförmig sind, also Kohlenwasserstoffe mit maximal 3 bis 4 Kohlenstoffatomen pro Molekül. Das Verfahren soll mit Primärluftmengen durchführbar sein, die zwischen 5 und 30% der Luftmenge liegen, die zur stöchiometrischen Verbrennung der eingesetzten Kohlenwasserstoffe benötigt wird.

Gemäss der Erfindung wird die Aufgabe dadurch gelöst, dass als Metallkörper Formkörper verwendet werden, die aus einer Aluminiumlegierung mit 15 bis 35 Gew.-% Silizium (bevorzugt zwischen 20 und 25 Gew.-%) bestehen. Vorteilhaft werden Metallkörper aus einem Al/Si-Eutektikum mit darin verteilter Primärphase aus Silizium verwendet.

Die Metallkörper können zerkleinerte Bruchstücke eines AlSi-Gussstückes sein, das als Werkstoff für verschiedene Zwecke, z.B. für die Gehäuse von Kolbenmaschinen, bekannt und handelsüblich ist. Es kann aber auch ein Legierungspulver hergestellt und zu den Metallkörpern verpresst werden. Während des Betriebs sind die metallischen Formkörper bei Temperaturen zwischen 600 und 800 °C einem Gasstrom ausgesetzt, der Luftsauerstoff und gasförmige oder vergaste Kohlenwasserstoffe enthält. Dabei formiert sich die katalytische Aktivität der Formkörper und aus den Kohlenwasserstoffen werden im Gasstrom zusätzlich CO, CO$_2$ und Wasserstoff gebildet.

Während der ersten Betriebsstunden findet also eine Wärmebehandlung der Metallkörper statt, die zu Strukturveränderungen und zur Formierung der katalytischen Eigenschaften der Formkörper führt. Vorteilhaft werden die Luftzahlen während der ersten Betriebsstunden so gewählt, dass im Gasstrom während der Wärmebehandlung Kohlenwasserstoffe und Luft im $C:O_2$-Verhältnis zwischen 2 und 8, vorzugsweise zwischen 4 und 6,5, vorhanden sind. Dies bedeutet, dass auf 4 C-Atome pro Mol der umzusetzenden Kohlenwasserstoffe ein Mol $O_2$ trifft. Man kann aber die zu verwendenden Formkörper bereits vor Inbetriebnahme des Reaktors, d.h. vor dem Einfüllen in den Reaktionsraum einer derartigen Wärmebehandlung unterwerfen. Dazu werden die Formkörper bei Temperaturen zwischen 600 und 800 °C einerseits einer oxidierenden Atmosphäre, die zur Bildung von $Al_2O_3$ führt, und andererseits einer kohlenwasserstoffhaltigen Atmosphäre, die zur Bildung von β-SiC führt, ausgesetzt. Dabei können beide Schritte gleichzeitig durch Behandlung in einem entsprechenden Gasstrom oder nacheinander, d.h. in getrennten Atmosphären, vorgenommen werden. Vorzugsweise werden die Metallkörper – vor dem ersten Betriebsbeginn – einer mindestens 10-stündigen Wärmebehandlung bei 600 bis 800 °C unter einer oxidierenden Atmosphäre bzw. unter einer gasförmige oder vergaste Kohlenwasserstoffe enthaltenden Atmosphäre ausgesetzt, wobei 5 bis 30% des vorhandenen Aluminiums in $\alpha$-$Al_2O_3$ bzw. 1 bis 10% des Siliziums in β-SiC übergeführt werden.

Diese Metallkörper zeigen eine hohe thermische Leitfähigkeit. Temperaturunterschiede im Reaktionsraum gleichen sich daher weitgehend von selbst aus. Die Körper sind bezüglich Temperaturschwankungen unempfindlich und zeigen auch nach Lufteinbrüchen noch eine stabile katalytische Aktivität. Zwar lässt sich eine sehr geringe Russbildung während der ersten Betriebsstunden nachweisen, jedoch ist diese Russbildung derart gering, dass kein sichtbarer Russ entsteht und die katalytische Aktivität nicht beeinträchtigt wird. Bei Verwendung schwefelhaltiger Brennstoffe wird ein Teil des Schwefels während der ersten Betriebsstunden an den Metallkörpern adsorbiert, jedoch wächst die adsorbierte Schwefelmenge während langer Betriebsdauern nicht mehr und führt zu keiner Beeinträchtigung der Umsetzung. Dies ermöglicht es, Haushalts- und Industriebrenner mit nicht entschwefelten Heizölen zu betrieben, wobei sowohl die Verwendung von leichtem oder schwerem Heizöl möglich ist. Ebenso ist der Betrieb von Brennkraftmaschinen, z.B. Kraftfahrzeugen, mit Rohbenzin oder Dieselöl möglich. Durch die erfindungsgemässe Vorvergasung des Brennstoffes kann dabei die Schadstoffemission der Brennkraftmaschinen wesentlich herabgesetzt werden. Beim Betrieb von Haushaltsbrennern ergibt sich ferner die Möglichkeit, dass auch Brenner, die für eine höhere Maximalleistung ausgelegt sind, bei geringem Heizwärme-Bedarf mit geringen Durchsätzen kontinuierlich betrieben und geregelt werden können.

Dabei ist es besonders vorteilhaft, dass mit geringen Primärluftmengen, z.B. mit Luftzahlen zwischen 0,05 und 0,3, vorteilhaft etwa 0,09 bis 0,1 gearbeitet werden kann, wodurch die Energieverluste bei der Vergasung klein gehalten werden können. Die Verbrennung in der Verbrennungseinrichtung kann ebenfalls mit verhältnismässig kleinen Luftzahlen erfolgen. So kann die Gesamtluftmenge auf Luftzahlen zwischen 1 und 1,2 begrenzt werden (schwach überstöchiometrisch). Bei Kraftfahrzeugmotoren bedeutet dies, dass kein unnötiger Luftüberschuss im Verbrennungsgemisch als Ballast durch den Motor getrieben wird, aber die Abmagerung gleichzeitig ausreicht, um eine Emission unverbrannter Schadstoffe zu vermeiden. Dabei kommt es weder zu Zündaussetzern noch zu einer Trägheit bei Lastwechseln. Bevorzugt werden Luftzahlen zwischen 1 und 1,07. Dadurch werden bei Brennern auch hohe Verbrennungstemperaturen möglich. Eine nennenswerte Emission von Stickoxiden oder Schwefeloxiden wird auch bei diesen hohen Temperaturen nicht beobachtet, selbst wenn schwefelhaltige Brennstoffe verwendet werden.

Durch die Wärmebehandlung wird ein Teil (vorteilhaft 5 bis 30%) des vorhandenen Aluminiums in $\alpha$-$Al_2O_3$, ein Teil (vorteilhaft 1 bis 10%) des Siliziums in β-SiC überführt. Ein geringer, im Schliff nicht nachweisbarer Anteil des Siliziums ist auch in Siliziumnitrid überführt. Nicht nachweisbar sind Siliziumoxide, Aluminiumkarbide, Aluminiumsilikate, Aluminiumsiliziumkarbide und Schwefelverbindungen.

Die Bildung von $Al_2O_3$ und SiC ist mit einer Gewichtszunahme verbunden, die in geringem Masse auch auf eine anfängliche spurenweise Bildung von Russ zurückzuführen ist. Dieser kann durch Abbrennen nachgewiesen werden, ist jedoch in Hohlräumen des Materials abgelagert, ohne sichtbar zu sein. Der Russgehalt beträgt weniger als etwa 3 Gew.-% des Gesamtgewichts des Katalysators. Nach langen Betriebsdauern (über 2000 Stunden) konnte darüber hinaus praktisch keine weitere Gewichtszunahme und keine weitere Russbildung beobachtet werden. Sofern schwefelhaltige Kohlenwasserstoffe verwendet werden, zeigt sich analog zur Russbildung eine gewisse Adsorption des Schwefels, die jedoch ebenfalls keine Beeinträchtigung der katalytischen Aktivität zeigt und auch bei langen Betriebsdauern einen sehr geringen Schwellwert nicht überschreitet.

Überraschenderweise wird durch eine Vergrösserung der Porosität (Oberfläche) der Katalysator-Formkörper keine wesentliche Aktivitätszunahme erreicht. Es ist daher zur Erzielung einer hohen Aktivität nicht erforderlich, die Oberfläche von Katalysatoren, die durch Zerkleinern eines Gussstückes hergestellt sind, über den bei der Herstellung naturgemäss anfallenden Wert von z.B. 0,03 bis 0,2 m²/g durch besondere Herstellungsschritte zu erhöhen.

Die hohe Aktivität des Katalysators nach der Erfindung ist sehr überraschend, da bekannte Katalysatoren aus $\alpha$-$Al_2O_3$ oder eine Aluminium/

Silizium-Keramik keine nennenswerte Aktivität aufweisen, sondern nur als Träger für andere Komponenten verwendet werden.

Eine AlSi-Legierung erscheint ferner als Katalysator für die angegebene Reaktion ungeeignet, da der Schmelzpunkt des Eutektikums niedrig und die Reaktionstemperatur hoch ist, dieser Katalysator daher besonders temperaturempfindlich sein sollte. Demgegenüber zeigt es sich, dass der Katalysator zumindest kurzzeitige Temperaturerhöhungen ohne Schädigung übersteht und dass bereits bei Temperaturen um 600 bis 800 °C hohe Umsätze erreicht werden können, während die Umsetzungstemperaturen bei bekannten Katalysatoren meist um wenigstens 50 °C höher liegen.

Ferner zeichnet sich der Katalysator gemäss der Erfindung gegenüber bekannten Katalysatoren dadurch aus, dass der Gehalt an $CO_2$ und $H_2O$ im Produktgas verhältnismässig niedrig gehalten werden kann. Im Zusammenhang damit steht auch, dass der Katalysator hinsichtlich der Russbildung besonders robust ist und keine Massnahmen zur Russverhinderung erfordert. Dies deutet darau hin, dass vor allem endotherme Vorgänge katalysiert werden. Wie nämlich in der DE-A-26 14 838 dargelegt ist, setzen bei der katalytischen Oxidation von Kohlenwasserstoffen unter Luftmangel bei niedrigeren Betriebstemperaturen zunächst exotherme Prozesse ein, die zu einer ersten Spaltung der Kohlenwasserstoffe führen und eine hohe Reaktionswärme aufweisen. Bei höheren Umsetzungstemperaturen setzen endotherme Folgereaktionen ein, die an einer Abnahme der Reaktionswärme erkennbar sind. Bei weiterer Steigerung der Umsetzungstemperatur setzen erneut endotherme Prozesse ein, die schliesslich zur vollkommenen Durchspaltung der Kohlenwasserstoffe und zur Annäherung ans thermodynamische Gleichgewicht (Bildung von $H_2O$, $CO_2$ und Russ) führen. Durch den Katalysator gemäss der Erfindung werden die endothermen Reaktionen bereits bei niedrigen Temperaturen eingeleitet. Es kommt zu einer besonders wirkungsvollen Unterdrückung der Russbildung und zu geringen Gehalten an $CO_2$ und $H_2O$, wobei derartige, möglicherweise entstandene Oxidations-Endprodukte unter Umständen wieder verbraucht werden. Der Katalysator ist daher auch gegenüber einem Kontakt mit flüssigen Brennstofftröpfchen weitgehend unempfindlich.

Anhand von 8 Figuren und einem Ausführungsbeispiel wird die Erfindung weiter erläutert.

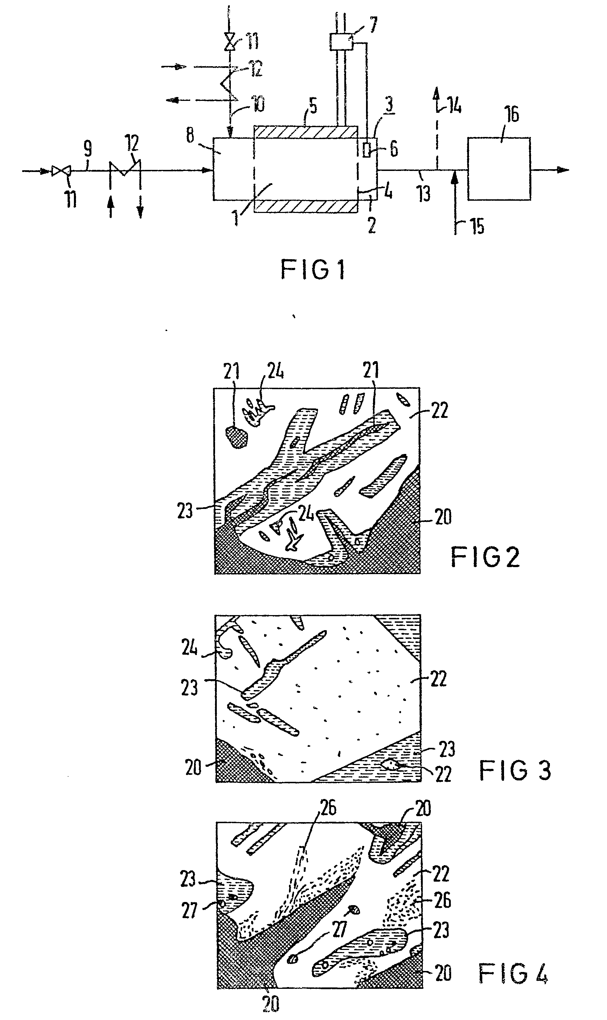

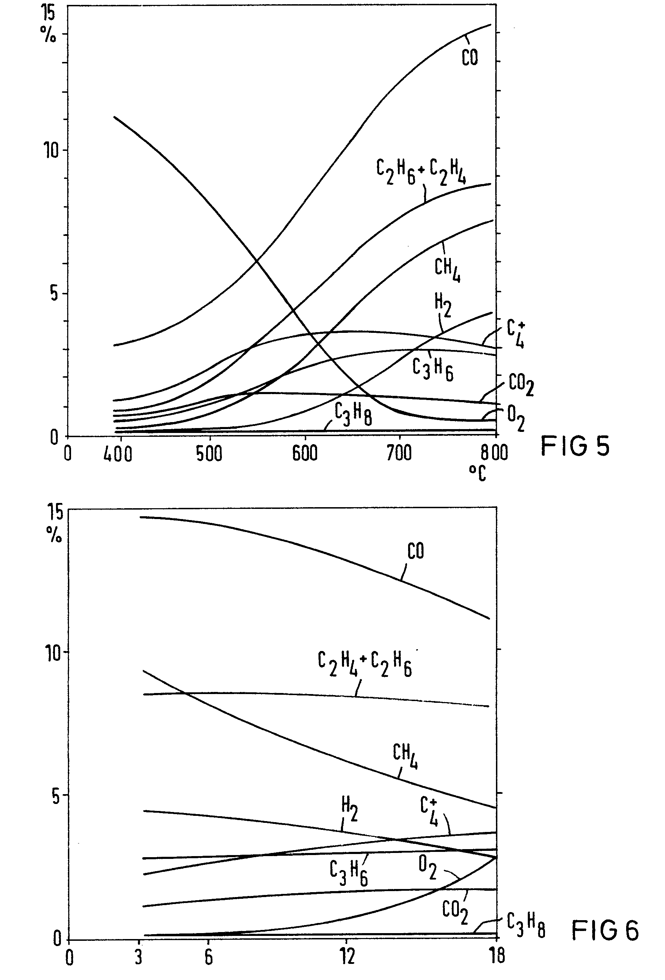

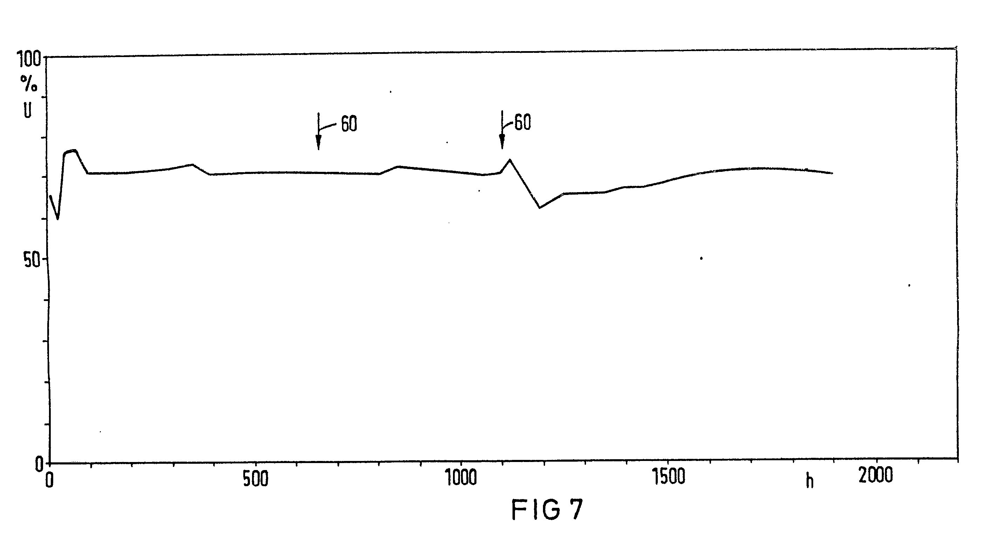

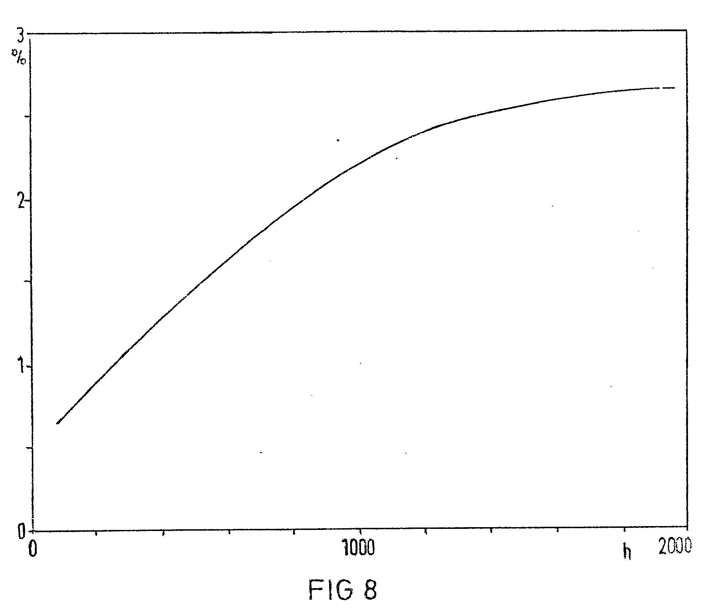

Fig. 1 stellt eine Anordnung zur Umsetzung flüssiger Kohlenwasserstoffe mit Luft und zum Betrieb einer Verbrennungseinrichtung mit dem erzeugten Brenngas dar. In Fig. 2 ist ein Schliff senkrecht zur Kante eines AU-Si-Formkörpers (Metallkörpers) gezeigt, bevor der Formkörper einem Kohlenwasserstoff/Luft-Gasstrom ausgesetzt wird. Fig. 3 zeigt einen Ausschnitt aus Fig. 2, Fig. 4 einen ähnlichen Schliff, nachdem der Formkörper dem erwähnten Gasstrom ausgesetzt war. Die Fig. 5 und 6 geben die Zusammensetzung des erzeugten Brenngases in Abhängigkeit von der Reaktionstemperatur bzw. der Katalysatorbelastung an. In den Fig. 7 und 8 ist der erzielte Umsatz und die abgelagerte Russmenge in Abhängigkeit der Betriebszeit für einen Langzeitbetrieb dargestellt. Die gemäss der Erfindung zur Umsetzung der Kohlenwasserstoffe verwendeten Metallkörper 1 sind im Reaktionsraum 2 eines Gasgenerators 3 angeordnet, z.B. in Form einer Schüttung, die von perforierten Platten 4 zusammengehalten wird. Der hier für Testzwecke verwendete Gasgenerator besitzt bei kleinem Schüttungsvolumen verhältnismässig grosse und dicke Wände und weist daher so hohe Wärmeverluste auf, dass die zur Umsetzung benötigte Reaktionstemperatur nur durch äussere Beheizung des Reaktionsraumes aufrechterhalten werden kann. Dazu dient ein Heizmantel 5, der z.B. elektrisch mittels einer Regeleinrichtung 7 beheizt wird, die von einem im Reaktionsraum angeordneten Temperaturfühler 6 gesteuert wird. Dem Eingang des Reaktionsraumes ist ein Mischraum 8 vorgeschaltet, in den Zuführungen 9 und 10 für Kohlenwasserstoff und Luft münden. Diese Zuführungen enthalten Dosierventile 11 zur Einstellung des Kohlenwasserstoff-Durchsatzes und der vorgesehenen Luftzahlen sowie Heizvorrichtungen 12, z.B. Wärmetauscher, zur Vorheizung der Reaktionspartner. Das entstehende Brenngas kann von der Auslassleitung 13 des Gasgenerators entweder über eine Testleitung 14 entnommen und analysiert werden, oder es wird mit Verbrennungsluft (Sekundärluft, Leitung 15) vermischt und in eine Verbrennungseinrichtung 16 gegeben. Als Verbrennungseinrichtung dient ein Haushaltsbrenner, es kann aber auch eine Brennkraftmaschine, z.B. ein Kraftfahrzeugmotor oder eine Gasturbine, vorgesehen sein.

Zur Herstellung der Metallkörper wird ein handelsübliches Gussstück einer Aluminium-Silizium-Legierung zu Bruchstücken von etwa 5 mm Durchmesser gebrochen. Das vom Hersteller als «Aluminiumsilicide» bezeichnete Ausgangsmaterial zeigt in der Analyse neben Aluminium 22 Gew.-% Silizium, 0,1 Gew.-% Titan, 0,1 Gew.-% Vanadium und 0,1 Gew.-% Nickel. Aluminium und Silizium liegen, soweit es in der Analyse erfassbar ist, als Eutektikum mit Si-Primärphase vor. Für das Aluminium wurde die Gitterkonstante innerhalb der Fehlergrenzen als die Gitterkonstante des reinen Aluminiums ermittelt. In der Al-Phase ist also nur ein sehr geringer Si-Gehalt gelöst. Eine derartige Legierung wird z.B. durch langsames Abkühlen einer Schmelze der beiden Bestandteile erhalten. Das Porenvolumen der Bruchstücke betrug 0,05 bis 0,15 ml/g, wobei Poren ab einem Durchmesser von 8 nm erfasst wurden. Der mittlere Porenradius betrug 10 nm, die Oberfläche 0,1 m²/g.

Aus dem gleichen Ausgangsmaterial wurden auch Bruchstücke anderer Si-Gehalte und anderer Porositäten erzeugt, z.B. indem ein Teil des Aluminiums aus dem Gefüge gelöst wurde. Auch wurde durch Mahlen der Bruckstücke ein Legierungspulver hergestellt, dieses mit 2 Gew.-% Graphit als plastifizierendes Gleit- und Schmiermittel vermischt und in einer Pillenpresse bei einem Druck von 750 kg/cm² kalt verpresst. Derartige Tabletten besitzen eine wesentlich grössere Porosität, zeigen jedoch im wesentlichen das gleiche katalytische Verhalten wie die zuerst erwähnten Bruchstücke, auf die sich die im folgenden beschriebenen Ergebnisse beziehen.

Über diese Bruckstücke wird im Reaktor ein Gemisch aus Heizöl und Luft geleitet. Für einen Dauerversuch wurde Heizöl «extra leicht», Dichte 0,85, C-Gehalt 85,7 Gew.-%, verwendet, jedoch kann (z.B. zum Betrieb eines Brenners) auch mitleres und schwereres Heizöl (Dichte 0,92 bzw. 0,98, C-Gehalt 85,3 bzw. 84,9 Gew.-%) verwendet werden. Auch die Spaltung von unverbleitem Rohbenzin («straight run»-Benzin) wurde im Hinblick auf den Betrieb einer nachgeschalteten Brennkraftmaschine mit Erfolg durchgeführt.

Das Heizöl wurde auf etwa 415 °C vorgeheizt, die Luftzahl des Gemisches zu 0,09 ± 0,01 eingestellt. Die Belastung der Reaktorfüllung betrug 12 l Heizöl pro Liter Schüttvolumen und Stunde.

Vor der ersten Inbetriebnahme des Reaktors wurde eine Probe der Metallkörper entnommen und röntgenographisch, analytisch und im Schliff mit der Mikrosonde und dem Lichtmikroskop untersucht. Die Fig. 2 und 3 zeigen den lichtmikroskopischen Befund.

Vor dem dunklen Hintergrund 20 sind vereinzelte Risse und Poren 21 im Material erkennbar. Die Hauptmasse besteht aus der hellen Phase 22 des star aluminiumhaltigen Eutektikums. Darin eingelagert sind nadel- oder balkenförmige Kristalle 23, die sich als die Primärphase des Siliziums erweisen. Als Verunreinigung findet sich ferner vereinzelt eine hellgraue eisenhaltige Phase 24, deren Zusammensetzung etwa der intermetallischen Verbindung $Al_9Fe_2Si_2$ entspricht und schwach Mn- und Ni-haltig ist. Die beiden letztgenannten, auch analytisch festgestellten Verunreinigungen finden sich in äusserst geringer Verteilung auch in den anderen Bereichen des Werkstoffes.

Nach 12 Stunden wurde eine weitere Probe der Metallkörper entnommen und auf gleiche Weise analysiert. Das sich ergebende Schliffbild (Fig. 4) lässt wieder deutlich die helle, stark aluminiumhaltige Phase 22 und die eingelagerte graue Si-Phase 23 erkennen. Daneben werden sehr feinkörnige Bereiche 26 beobachtet, in denen Sauerstoff enthalten ist. Es zeigt sich, dass es sich hierbei um eine sehr feinkörnige $\alpha$-$Al_2O_3$- Phase mit Einlagerungen verschiedener Bestandteile, hauptsächlich Aluminium und Silizium, handelt. Vor allem in den Randbereichen der Partikel treten ferner mittelgraue, kleine Ausscheidungen 27 auf, die als SiC identifiziert wurden. Der Katalysator ist jetzt für den Dauerbetrieb formiert.

Weitere Untersuchungen nach 200 bis 2000 Betriebsstunden zeigen, dass sich mit zunehmenden Betriebsdauern, in denen sich die Aktivität des Katalysators nicht mehr wesentlich ändert, die Ausbildung von $Al_2O_3$-haltigen Bereichen allmählich verstärkt. Der Aufbau dieser Bereiche ist sehr inhomogen. Teils liegt das Oxid in nahezu reiner $\alpha$-Form vor, häufig ist es von verschiedenen Gefügebestandteilen in äusserst feiner Verteilung durchsetzt. Dabei treten sowohl Si und SiC-haltige

wie auch stark Al-haltige Gefügebestandteile auf. Daneben sind auch die stark Al-haltigen Eutektikum-Teilchen von einer dunkelgrauen, $Al_2O_3$-haltigen Schicht umgeben. Dazwischen finden sich Teilchen, die überwiegend aus Si bestehen und dunkelgraue $Al_2O_3$-Ausscheidungen sowie mittelgraue $\beta$-SiC-Ausscheidungen enthalten. Anhäufungen dieser Ausscheidungen treten vor allem in den Randbereichen der Partikel und entlang der Risse und Poren auf. Mit zunehmender Betriebsdauer scheint die Grösse der SiC-Ausscheidungen sehr langsam zu wachsen. Ferner konnte festgestellt werden, dass in den Poren (sowohl in den Poren innerhalb der oxidischen Randzonen als auch in den Poren im Partikelinneren) geringe Mengen Schwefel angereichert sind.

Prinzipiell die gleichen Ergebnisse wurden auch bei Verwendung von n-Heptan und Dieselöl erhalten.

Mehrmals gelangte infolge einer Betriebsstörung Luft im Überschuss in den Reaktionsraum. Obwohl ein Lufteinbruch mit Temperaturen verbunden ist, die erheblich über dem Schmelzpunkt des Eutektikums liegen, wurde überraschenderweise ein Zusammensintern oder andere Veränderungen der Katalysatorstruktur praktisch nicht festgestellt. Es fanden sich lediglich an der Oberfläche durch Schmelzen und Erstarren geringfügig verrundete Bereiche. Offenbar verleiht das gebildete $Al_2O_3$ und SiC wie eine hochwarmfeste Matrix den Metallkörpern eine erhöhte Strukturstabilität.

In Fig. 5 ist die Gaszusammensetzung in Abhängigkeit von der Reaktionstemperatur angegeben, wenn Heizöl «extra leicht» mit einer Belastung von 12 l pro Liter Schüttvolumen und Stunde bei Luftzahlen um 0,09 im Reaktionsraum umgesetzt wird. Die Gasgehalte sind angegeben in Volumenprozent, bezogen auf das entstehende Gasvolumen (ohne kondensierbare, nichtumgesetzte Kohlenwasserstoff-Reste). Der Rest ist Stickstoff.

Entsprechend dem mit steigender Reaktionstemperatur steigenden Umsatz wird ein zunehmender Anteil des zugesetzten Luftsauerstoffes zur Bildung von Kohlenmonoxid verbraucht, wobei nur eine geringe Menge $CO_2$ entsteht. Neben Wasserstoff wird Methan sowie $C_2$- und $C_3$-haltige Kohlenwasserstoffe und ein als $C_4^+$ bezeichneter, bezüglich seines Wasserstoffgehaltes nicht unterschiedener Anteil erzeugt. Bemerkenswert ist, dass die Entstehung von Acetylen, das bei diesen Temperaturen instabil ist und unter Russbildung zerfallen würde, nicht beobachtet wurde.

Fig. 6 zeigt die gleichen Gasanalysen bei Einstellung einer konstanten Reaktionstemperatur von 750 °C und verschiedenen Katalysatorbelastungen. Mit zunehmendem Durchsatz nimmt zwar die Umsetzung ab, was an der Abnahme des CO-Gehaltes und an der Zunahme des Gehaltes an unverbrauchtem Sauerstoff erkennbar ist, jedoch ist das entstehende Gasgemisch, in dem ein Teil der eingesetzten flüssigen Kohlenwasserstoffe als nicht oder nur teilweise umgesetzter, lediglich verdampfter Brennstoff enthalten ist, auch bei so hohen Katalysatorbelastungen von 18 l/l · Std. für die meisten Anwendungen noch geeignet.

In Abbildung 7 ist der Anteil des eingesetzten flüssigen Brennstoffes, der in unter Normalbedingungen gasförmige (niedrige) Kohlenwasserstoffe umgesetzt wurde, in Abhängigkeit von den Betriebsstunden dargestellt. Die Luftzahl betrug etwa 0,09, die Katalysatorbelastung 12 l/l · Std., die Katalysatortemperatur 750 °C. Zunächst wurden die unbehandelten (d.h. einem Kohlenwasserstoff/Luft-Gasstrom nicht ausgesetzten) Metallkörper in den Reaktor eingefüllt. Nach den ersten 12 Betriebsstunden hat sich der Katalysator zu der im Zusammenhang mit Fig. 4 beschriebenen Struktur formiert. Nach anfänglichen Schwankungen stellt sich ein Umsetzungsgrad von etwa 70% ein. Mit den Pfeilen 60 sind die erwähnten Lufteinbrüche in den Katalysator bezeichnet. Beim ersten Lufteinbruch blieb der Umsetzungsgrad praktisch konstant, nach dem zweiten Lufteinbruch zeigt sich eine vorübergehende Abnahme auf etwa 60%, auf die jedoch ein langsamer Anstieg auf den vorangegangenen Wert folgt.

In diesen Kurven sind unzählige Ein- und Ausschaltungen der Anlage enthalten. Beim Ausschalten mussten keine besonderen Massnahmen getroffen werden, um den sich nur langsam abkühlenden Katalysator vor einströmender Luft zu schützen. Das Starten bei kalter Reaktorfüllung geschah, indem das Heizöl elektrisch verdampft und auf maximal 415 °C erhitzt, die äussere Beheizung des Reaktors eingeschaltet und zusätzlich die Vergasungsluft auf 560 °C elektrisch vorgewärmt wurde. Nach spätestens 8 Minuten konnte die Heizung der Vergasungsluft abgeschaltet werden, da die Heizleistung der äusseren Reaktorbeheizung ausreichte, um eine stabile Reaktionstemperatur von 750 °C aufrechtzuerhalten. Diese verhältnismässig lange Startzeit kann verkürzt werden, z.B. indem die Luftzahl erhöht und im Reaktor eine stärker exotherme Umsetzung mit entsprechend hoher Reaktionswärme durchgeführt wird. Um die Eignung der Al-Si-Metallkörper für die Umsetzung bei geringen Luftzahlen zu erproben, wurde jedoch auf derartige Zusatzmassnahmen im Rahmen dieser Testversuche verzichtet.

Wie bereits erwähnt wurde, kann eine Bildung von geringen Russmengen am Katalysator nachgewiesen werden. Fig. 8 zeigt die am Katalysator abgelagerte Russmenge in Gewichtsprozent, bezogen auf das Gewicht der frischen Metallkörper. Selbst nach 2000 Betriebsstunden lag die Russbildung unter 3%. Der Russ ist dabei nicht sichtbar, sondern vermutlich in den Poren abgelagert. Parallel zur Russbildung wurde auch eine geringfügige Adsorption von Schwefel in den Poren der Metallkörper festgestellt. Weder Russ noch Schwefel beeinträchtigen jedoch die Aktivität des Katalysators. Insbesondere kann der Katalysator auch stärker schwefelhaltige Brennstoffe umsetzen. Dabei kommt es weder im Brenngas noch im Abgas der mit dem Brenngas gespeisten Verbrennungseinrichtung zur Bildung von $SO_3$ oder anderen schädlichen Schwefeloxiden.

**Patentansprüche**

1. Verfahren zum Betrieb von Verbrennungseinrichtungen, bei dem flüssige Kohlenwasserstoffe mit Luft (Primärluft) vermischt, in einen Reaktionsraum geleitet, dort an Metallkörpern bei erhöhter Temperatur durch partielle Oxidation in ein russfreies, Kohlenmonoxid, Wasserstoff und gasförmige Kohlenwasserstoffe enthaltendes Brenngasgemisch umgesetzt, mit weiterer Luft (Sekundärluft) vermischt und in die Verbrennungseinrichtung eingeleitet werden, dadurch gekennzeichnet, dass als Metallkörper Formkörper aus einer Aluminiumlegierung mit 15 bis 35 Gew.-% Silizium verwendet werden.

2. Verfahren nach Anspruch 1, dadurch gekennzeichnet, dass Formkörper aus einem Al/Si-Eutektikum mit darin verteilter Primärphase aus Silizium verwendet werden.

3. Verfahren nach Anspruch 1 oder 2, dadurch gekennzeichnet, dass während der ersten Betriebsstunden 5 bis 30% des vorhandenen Aluminiums in $\alpha$-$Al_2O_3$ und 1 bis 10% des vorhandenen Siliziums in $\beta$-SiC überführt werden.

4. Verfahren nach Anspruch 1 oder 2, dadurch gekennzeichnet, dass die Metallkörper vor dem ersten Betriebsbeginn einer mindestens 10-stündigen Wärmebehandlung bei 600 bis 800 °C unter einer oxidierenden Atmosphäre zur Überführung von 5 bis 30% des vorhandenen Aluminiums in $\alpha$-$Al_2O_3$ ausgesetzt werden.

5. Verfahren nach einem der Ansprüche 1, 2 oder 4, dadurch gekennzeichnet, dass die Metallkörper vor dem ersten Betriebsbeginn einer mindestens 10-stündigen Wärmebehandlung bei 600 bis 800 °C unter einer gasförmige oder vergaste Kohlenwasserstoffe enthaltenden Atmosphäre zur Überführung von 1 bis 10 Gew.-% des Siliziums in $\beta$-SiC ausgesetzt werden.

6. Verfahren nach den Ansprüchen 4 und 5, dadurch gekennzeichnet, dass die Überführung des Aluminiums und des Siliziums in einer gemeinsamen Wärmebehandlung in einem Kohlenwasserstoffe und Luft im $C:O_2$-Verhältnis zwischen 2 und 8 enthaltenden Gasstrom durchgeführt werden.

7. Verfahren nach einem der Ansprüche 1 bis 6, dadurch gekennzeichnet, dass Primärluftmengen mit Luftzahlen zwischen 0,05 und 0,3 verwendet werden.

8. Verfahren nach Anspruch 7, dadurch gekennzeichnet, dass Gesamtluftmengen mit Luftzahlen zwischen 1 und 1,2, bevorzugt bis maximal 1,07, verwendet werden.

9. Verfahren nach einem der Ansprüche 1 bis 8 zum Betrieb eines Brenners, dadurch gekennzeichnet, dass als Kohlenwasserstoffe Heizöle, insbesondere nicht entschwefelte Heizöle, verwendet werden.

10. Verfahren nach einem der Ansprüche 1 bis 8 zum Betrieb einer Brennkraftmaschine, dadurch gekennzeichnet, dass als Kohlenwasserstoffe Rohbenzin oder Dieselöl verwendet wird.

**Revendications**

1. Procédé pour faire fonctionner des installations de combustion qui consiste à mélanger des hydrocarbures liquides à de l'air (air primaire), à les envoyer dans une chambre de réaction, à les y transformer sur des corps métalliques à température élevée par oxydation partielle en un mélange de gaz combustibles exempts de suie contenant de l'oxyde de carbone, de l'hydrogène et des hydrocarbures gazeux, à les mélanger à un appoint d'air (air secondaire) et à les envoyer dans l'installation de combustion, caractérisé en ce qu'il consiste à utiliser comme corps métalliques des corps moulés en un alliage d'aluminium contenant de 15 à 35% en poids de silicium.

2. Procédé suivant la revendication 1, caractérisé en ce qu'il consiste À utiliser des corps moulés en un eutectique Al/Si au sein duquel est répartie une phase primaire en silicium.

3. Procédé suivant la revendication 1 ou 2, caractérisé en ce qu'il consiste à transformer pendant les premières heures de fonctionnement de 5 à 30% de l'aluminium présent en $Al_2O_3$-alpha et de 1 à 10% du silicium présent en SiC-bêta.

4. Procédé suivant la revendication 1 ou 2, caractérisé en ce qu'il consiste à soumettre les corps métalliques avant le premier début de fonctionnement à un traitement thermique pendant au moins 10 heures, entre 600 et 800 °C sous une atmosphère oxydante, pour transformer de 5 à 30% de l'aluminium présent en $Al_2O_3$-alpha.

5. Procédé suivant l'une des revendications 1, 2 ou 4, caractérisé en ce qu'il consiste à soumettre les corps métalliques, avant le premier début de fonctionnement, à un traitement thermique pendant au moins 10 heures, entre 600 et 800 °C, sous une atmosphère contenant des hydrocarbures gazeux ou gazéifiés, en vue de transformer de 1 à 10% en poids du silicium en SiC-bêta.

6. Procédé suivant les revendications 4 et 5, caractérisé en ce qu'il consiste à effectuer la transformation de l'aluminium et du silicium par un traitement thermique commun dans un courant gazeux contenant des hydrocarbures et de l'air en un rapport $C:O_2$ compris entre 2 et 8.

7. Procédé suivant l'une des revendications 1 à 6, caractérisé en ce qu'il consiste à utiliser des quantités d'air primaire avec des indices d'air compris entre 0,05 et 0,3.

8. Procédé suivant la revendication 7, caractérisé en ce qu'il consiste à utiliser des quantités d'air total avec des indices d'air compris entre 1 et 1,2 et de préférence allant jusqu'à 1,07 au maximum.

9. Procédé suivant l'une des revendications 1 à 8 pour faire fonctionner un brûleur, caractérisé en ce qu'il consiste à utiliser comme hydrocarbures des mazouts, notamment des mazouts non désulfurés.

10. Procédé suivant l'une des revendications 1 à 8 pour faire fonctionner une machine à combustion interne, caractérisé en ce qu'il consiste à utiliser comme hydrocarbures de l'essence de distillation directe ou du carburant diesel.

**Claims**

1. A method of operating combustion devices in which liquid hydrocarbons are mixed with air (primary air) and introduced into a reaction space and are there converted by partial oxidation at an elevated temperature and at metal bodies, into a combustible gas mixture, which contains carbon monoxide which is free from soot, hydrogen and gaseous hydrocarbons, and the gas mixture is mixed with further air (secondary air) and introduced into the combustion device, characterised in that moulded bodies made of an aluminium alloy containing 15 to 35% by weight of silicon are used as the metal bodies.

2. A method as claimed in Claim 1, characterised in that moulded bodies which consist of an Al/Si-eutectic having a primary phase consisting of silicon dispersed therein, are used.

3. A method as claimed in Claim 1 or Claim 2, characterised in that during the first hours of operation, 5 to 30% of the aluminium present is converted into $\alpha$-$Al_2O_3$ and 1 to 10% of the silicon present is converted into $\beta$-SiC.

4. A method as claimed in Claim 1 or Claim 2, characterised in that, prior to the start of the operation, the metal bodies are subjected to a heat treatment at 600 to 800 °C for at least 10 hours in an oxidising atmosphere to convert 5 to 30% of the aluminium present into $\alpha$-$Al_2O_3$.

5. A method as claimed in one of Claims 1, 2 or 4, characterised in that, prior to the start of the operation, the metal bodies are subjected to a heat treatment at 600 to 800 °C for at least 10 hours in an atmosphere containing gaseous or gasified hydrocarbons, to convert 1 to 10% by weight of the silicon into $\beta$-SiC.

6. A method as claimed in one of Claims 4 and 5, characterised in that the conversion of the aluminium and of the silicon is carried out by a common heat treatment in a gas stream which contains hydrocarbons and air with a $C:O_2$-ratio of between 2 and 8.

7. A method as claimed in one of Claims 1 to 6, characterised in that amounts of primary air are used, which have air numbers between 0.05 and 0.3.

8. A method as claimed in Claim 7, characterised in that overall amounts of air are used which have air numbers between 1 and 1.2, preferably up to a maximum of 1.07.

9. A method as claimed in one of Claims 1 to 8 for the operation of a burner, characterised in that heating fuel oils, in particular heating fuel oils which are not desulphurised, are used as hydrocarbons.

10. A method as claimed in one of Claims 1 to 8 for the operation of a fuel-burning machine, characterised in that crude petro or Diesel oil are used as hydrocarbons.

FIG 1

FIG 2

FIG 3

FIG 4

FIG 5

FIG 6

FIG 7

3/4

FIG 8